# EUROPEAN PATENT APPLICATION

(11) **EP 4 730 511 A1**
(43) Date of publication of application: **22.04.2026**
(21) Application number: 24207262.7
(22) Date of filing: 17.10.2024
(51) Int. Cl.: H01M 50/209, H01M 50/249, H01M 50/262, H01M 50/289

(54) **SPACE COMPENSATING SYSTEM**

(71) Applicant: Volvo Truck Corporation, 405 08 Göteborg (SE)
(72) Inventor: LEBEDEVA, Svetlana, MÖLNLYCKE (SE); ABDIKADER, Naima, GÖTEBORG (SE)
(74) Representative: Ström & Gulliksson AB

(57) **Abstract**

Present disclosure relates to a space compensating system for a battery unit comprising one or more cell arrays and a housing, the one or more cell arrays being arranged in said housing, the space compensating system comprising a plate arranged on a first cell array of the one or more cell arrays, and one or more adjustable elements configured to be adjustably mounted to the housing of the battery unit, wherein the one or more adjustable elements each has an end portion adapted to adjustably engage the plate for adjusting a pressure exerted by the plate onto the cell array for clamping the one or more cell arrays against the housing.

## Description

### TECHNICAL FIELD

The disclosure relates generally to battery systems. In particular aspects, the disclosure relates to a space compensating system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The need for efficient and reliable space compensation systems in battery units has become increasingly critical with the widespread adoption of battery technologies in various applications, such as electric vehicles, renewable energy storage, and portable electronic devices. Ensuring the stability and longevity of battery units is paramount, as any compromise in these aspects can significantly impact performance and safety.

Battery units typically consist of one or more cell arrays housed within an enclosure. As these cells undergo charge and discharge cycles, they experience volumetric changes due to chemical reactions and thermal expansion. Without an effective space compensating mechanism, these expansions and contractions can lead to structural stress, potential damage to the cells, and a reduction in the battery's operational life.

Traditional space compensating systems, have attempted to address this issue by incorporating various mechanisms to manage the internal space within battery housings. However, these conventional solutions often fall short in several key areas.

Many prior art solutions struggle to provide uniform pressure distribution across the entire cell array. This uneven pressure can result in localized stress points, leading to cell damage and reduced battery efficiency.

The systems described in prior art often involve complex mechanical components that can increase manufacturing costs and assembly time. The need for precise alignment and adjustment of these components further complicates the production process.

Traditional space compensating systems may not be easily adaptable to different battery configurations and sizes. This lack of flexibility can be a significant drawback in applications where battery units vary widely in their dimensions and requirements.

Over time, the mechanical components in these systems can wear out or lose their effectiveness, compromising the integrity of the space compensation mechanism. This degradation can result in increased maintenance needs and reduced battery lifespan.

Given these limitations, there is a compelling need for an improved space compensating system that can provide consistent pressure distribution, simplify the manufacturing process, offer greater adaptability to various battery configurations, and enhance thermal management. Such advancements would not only enhance the performance and safety of battery units but also extend their operational life and reduce overall costs.

### SUMMARY

According to a first aspect of the disclosure, a space compensating system for a battery unit is provided. The space compensating system comprises one or more cell arrays and a housing, the one or more cell arrays being arranged in said housing, the space compensating system comprising a plate arranged on a first cell array of the one or more cell arrays, and one or more adjustable elements configured to be adjustably mounted to the housing of the battery unit, wherein the one or more adjustable elements each has an end portion adapted to adjustably engage the plate for adjusting a pressure exerted by the plate onto the cell array for clamping the one or more cell arrays against the housing. The first aspect of the disclosure may seek to provide a more reliable and efficient space compensation mechanism for battery units. A technical benefit may include enhanced pressure distribution and adaptability to various battery configurations.

Optionally in some examples, including in at least one preferred example, each of the one or more adjustable elements may be configured to be accessible from an exterior of the housing upon being mounted to said housing. A technical benefit may include easier adjustment and maintenance of the space compensating system without disassembling the housing.

Optionally in some examples, including in at least one preferred example, each of the one or more adjustable elements may comprise an engagement portion being configured to be engaged by a tool to adjust the position of the adjustable element relative to the housing, wherein said engagement portion is configured to be accessible from the exterior of said housing, upon the one or more adjustable elements being mounted to the housing. A technical benefit may include the ability to make adjustments to the system with standard tools, improving ease of use and precision.

Optionally in some examples, including in at least one preferred example, the space compensating system may further comprise at least one biasing element configured to provide a biasing force urging the plate towards the first cell array. A technical benefit may include maintaining consistent pressure on the cell array, which can improve the stability of the cell array and the longevity of the battery unit due to a more desirable pressure distribution on the first cell array.

Optionally in some examples, including in at least one preferred example, the at least one biasing element may be adapted to be arranged between the plate and the housing. A technical benefit may include better distribution of the biasing force, leading to improved pressure management within the housing.

Optionally in some examples, including in at least one preferred example, the biasing element may comprise a spring arranged coaxially with said at least one of the one or more adjustable elements such that said adjustable element extends inside the spring. A technical benefit may include compact and efficient integration of the biasing element with the adjustable elements, conserving space within the housing.

Optionally in some examples, including in at least one preferred example, the biasing element may be configured to be mounted to the housing and the plate. A technical benefit may include secure and stable attachment of the biasing element, enhancing the overall reliability of the space compensating system.

Optionally in some examples, including in at least one preferred example, the space compensating system may further comprise at least two adjustable elements arranged such that an angle of the plate relative to the first cell array and/or a curvature of the plate is adjustable by means of adjustment of said at least two adjustable elements. A technical benefit may include improved flexibility in adjusting the plate for optimal pressure distribution across the cell array.

Optionally in some examples, including in at least one preferred example, the end portion of at least one of the one or more adjustable elements may be provided as a flanged portion adapted to engage the plate by means of being brought into contact with said plate. A technical benefit may include enhanced stability and secure engagement of the adjustable elements with the plate and/or an improved pressure distribution on the plate and consequently on the first cell array.

Optionally in some examples, including in at least one preferred example, at least one of the one or more adjustable elements may comprise a threaded portion configured to be in threaded engagement with the housing such that said at least one adjustable element is adjustable relative to the plate by means of rotation of said at least one adjustable element. A technical benefit may include precise and secure adjustment of the space compensating system via threaded engagement, which can improve pressure distribution and/or control.

Optionally in some examples, including in at least one preferred example, at least one of the one or more adjustable elements may be provided as an adjustable fastening element such as a bolt or screw. A technical benefit may include the use of standard fastening elements for easy and cost-effective assembly and adjustment of the space compensating system.

According to a second aspect of the disclosure, a battery system is provided. The battery system comprises a battery unit and a space compensating system according to any one of the examples described herein. The second aspect of the disclosure may seek to achieve a battery system allowing for more reliable and space efficient space compensating. A technical benefit may include enhanced pressure distribution and adaptability to various battery configurations.

Optionally in some examples, including in at least one preferred example, the plate may be arranged on top of an upper surface of the first cell array such that said plate is supported by said upper surface of the first cell array. A technical benefit may include enhanced stability and support for the cell array, improving the overall robustness of the battery system.

Optionally in some examples, including in at least one preferred example, the one or more adjustable elements may be adjustable along an adjustment axis extending substantially orthogonal to the plate. A technical benefit may include precise control over the pressure applied to the cell array, enhancing the effectiveness of the space compensating system.

Optionally in some examples, including in at least one preferred example, the plate may be arranged between a first side wall of the housing and the first cell array and the one or more adjustable elements may be adjustably mounted to said first side wall. A technical benefit may include improved space optimization within the battery housing, leading to a more compact and efficient design.

Optionally in some examples, including in at least one preferred example, the space compensating system may be configured to adjust a space between the first side wall of the housing and the first cell array by means of adjustment of the one or more adjustable elements. A technical benefit may include flexible space management, allowing for adjustments to accommodate changes in cell array size due to expansion and/or contraction.

Optionally in some examples, including in at least one preferred example, the battery system may further comprise a plurality of cell arrays arranged in a stacked configuration in the housing along a stacking axis. A technical benefit may include the ability to accommodate for space compensation in a simple and space efficient manner even for battery units with a plurality of cell arrays.

Optionally in some examples, including in at least one preferred example, the first cell array may be an outermost cell array of the one or more cell arrays and the plate is arranged along an outermost surface of the first cell array extending substantially orthogonally to the stacking axis. A technical benefit may include providing additional support and protection to the outermost cell array, enhancing the durability of the battery system. Another technical benefit may include that a less complex and more space-efficient manner of space compensation may be achieved.

Optionally in some examples, including in at least one preferred example, the battery system may further comprise a plurality of adjustable elements configured to be accessible from an exterior of the housing upon being mounted to said housing, wherein each of the plurality of adjustable elements comprises an engagement portion being configured to be engaged by a tool to adjust the position of the adjustable element relative to the housing, wherein said engagement portion is configured to be accessible from the exterior of said housing, upon the plurality of adjustable elements being mounted to the housing, the battery system further comprising a plurality of biasing elements configured to provide a biasing force urging the plate towards the first cell array, wherein each biasing element comprises a spring arranged coaxially with one of the plurality of adjustable elements such that said adjustable element extends inside the spring. A technical benefit may include enhanced ease of maintenance and adjustment, as well as improved pressure distribution and stability due to the integrated biasing elements.

According to a third aspect, a vehicle is provided. The vehicle comprises a battery system of any of the examples described herein. The third aspect of the disclosure may seek to achieve a vehicle with a battery system allowing for more reliable and space efficient space compensating. A technical benefit may include enhanced pressure distribution and adaptability to various battery configurations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle comprising a battery system according to an example.
**FIG. 2** is a schematic top or front view of a battery system according to an example.
**FIG. 3** is a schematic top or front view of the battery system of **FIG. 2** according to an example.
**FIG. 4** is a schematic top or front view of a space compensating system according to an example.

### DETAILED DESCRIPTION

The detailed description set forth below provides information and examples of the disclosed technology with sufficient detail to enable those skilled in the art to practice the disclosure.

Electrically propelled vehicles, i.e. vehicles that are propelled by means of an electrical motor commonly requires energy storage units in the form of batteries to power the electrical motor. The batteries are associated with challenges as they are heavy and space consuming and are subjected to both cyclic and irreversible swelling which may subject the battery device to large loads and irreversible damage.

The present disclosures relates to a space compensating system for accommodating mounting of the cell array(s) of a battery unit in a manner allowing for swelling as well as secure fixation. The space compensating system described herein may allow for adjustment to provide a correct clamping pressure holding the one or more cell arrays of the battery unit in position during the lifetime of the battery unit and provides a way to compensate for the cell array(s) contracting or swelling over time.

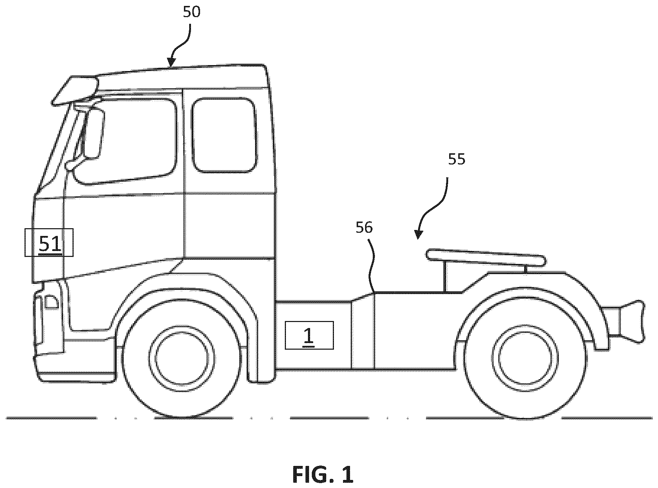

**FIG. 1** is an exemplary vehicle **50** which may comprise a battery unit **1** according to an example. In the depicted example, the vehicle **50** is a truck but it may be envisioned that the vehicle may be any type of vehicle. Preferably, the vehicle may be a heavy-duty vehicle, such as truck, bus or construction equipment, among other vehicle types. It may also be envisioned that the battery unit **1** is utilized for a marine vessel such as a boat or a motor and preferably an electrical motor configured to be powered by the battery unit **1.** It may also be envisioned that the battery unit **1** may be utilized for a stationary system such as a building and/or a stationary machinery. Accordingly, the battery unit **1** may be for a vehicle **50,** marine vessel, motor or a stationary system including a building and/or a stationary machinery. The battery unit **1** may be for an energy storage system of such a vehicle **50,** marine vessel, motor or stationary system.

The vehicle **50** may comprise an electric motor **51** configured to propel the vehicle **50.** The vehicle **50** may comprise a chassis **55** and the battery unit **1** may be adapted to be mounted to said chassis **55.** In the depicted example, the chassis **55** may comprise a frame **56.** Advantageously, the battery unit **1** may be adapted to be mounted to said frame **56.**

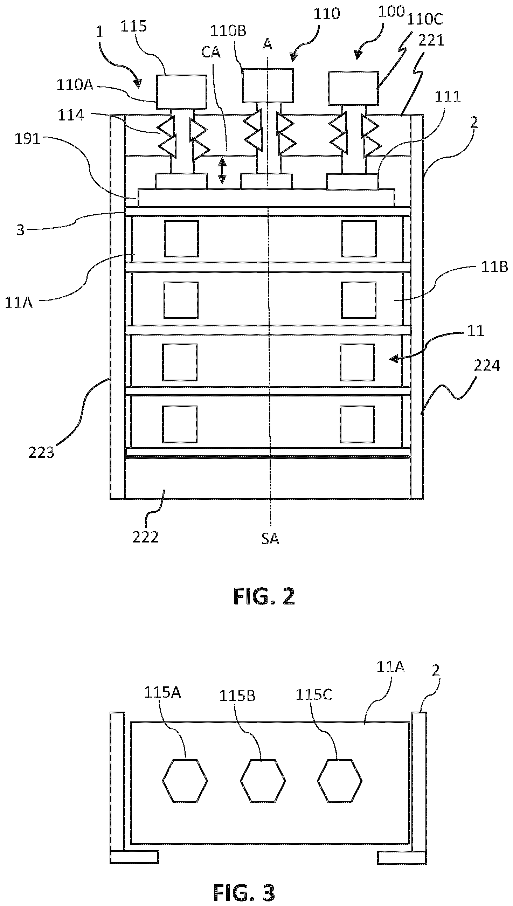

**FIG. 2** depicts the battery unit **1** in further detail. The battery unit **1** is for the vehicle **50.** As will be explained in further detail later on, the battery unit **1** may comprise a space compensating system **100.** Although it is only described with reference to a battery unit **1,** it may be envisioned that the compensating system **100** described herein may be used for other components than battery units.

In one example, the cell swelling compensator **100** and the battery unit **1** may form a battery system. In one example, the vehicle **50** may comprise the battery system.

The design and functionality of battery units are well-known for the skilled person and will not be described in lengthy detail. It may however be envisioned that the battery unit **1** comprises one or more cell arrays **11.** It may further be envisioned that the battery unit **1** comprises electrical connections for connecting the battery module **1** to an electrical consumer. In one example, the battery unit **1** may be configured to power the electrical motor **51** of the vehicle **50.** Hence, the electrical consumer may be the electrical motor **51** of the vehicle **50.** It may also be envisioned that battery unit **1** is configured to power a plurality of consumers including the electrical motor **51** and electrically powered auxiliaries.

The battery unit **1** may comprise a housing **2.** The housing **2** may be configured to be mounted to the chassis **55** of the vehicle **50** and preferably the frame **56** of the chassis **55.** In one example, the housing **2** may comprise an interface adapted to be mounted to the chassis **55** by means of one or more fasteners. As the skilled person realizes, the housing **2** may be mountable to the chassis **55** in a multitude of ways readily available and commonly known.

The housing **2** may be configured to accommodate the one or more cell arrays **11.** The housing **2** may form a container for the one or more cell arrays **11.** In the depicted example, the housing **2** forms a first side wall **221** and a second side wall **222.** The second side wall **222** may be arranged opposite to the first side wall **221.** The one or more cell arrays **11** may be mounted between the first side wall **221** and the second side wall **222.**

In one example, the housing **2** may comprise a third side wall **223** and a fourth side wall **224.** The third side wall **223** and the fourth side wall **224** may be arranged substantially perpendicular to the first side wall **221** and the second side wall **222.** The third and side wall **223** and the fourth side wall **224** may connected the first side wall **221** and the second side wall **222.** The fourth side wall **224** may be arranged opposite to the third side wall **223.** The third side wall **223** and the fourth side wall **224** may extend substantially parallel to the one or more battery modules **1.** The first, second, third and fourth side wall may together form a rectangular structure. Although the housing is depicted as a rectangular housing, the housing may depending on the requirements of the implementation be in any suitable shape and preferably in a shape allowing it to provide sufficient protection for the one or more cell arrays **11.**

In one example, the housing **2** may be provided with a front cover. In one example, the housing **2** may be provided with a rear cover. The front cover and/or the rear cover may be removably mounted to housing **2** and/or movable relative to the housing **2** to control access to the interior of the housing **2.**

The housing **2** may be adapted to support a plurality of cell arrays **11.** In the depicted example, the housing **2** is adapted to support four cell arrays **11.** The cell arrays **11** may be arranged in a stacked configuration. Accordingly, the plurality of cell arrays **11** may be arranged in parallel to each other and distributed along a common center axis. In the depicted example, the plurality of cell arrays **11** are arranged in a stacked configuration in the housing **2** along a stacking axis **SA.**

Each cell array **11** may be arranged in a separate module, e.g. a battery module. The battery unit **1** may thus comprise one or more battery modules arranged as aforementioned. Each module may comprise a cell array and a casing encapsulating the cell array. Each cell array may comprise one or more battery cells.

In the depicted examples, the plurality of cell arrays **11** are arranged one on top of the other but it may be envisioned that a plurality of cell arrays **11** are arranged side by side.

Further referencing the example of **FIG. 2****,** the battery unit **1** may comprise one or more spacers **3.** A spacer **3** may be arranged between each cell array **11.** The spacer **3** may be in a resilient material.

A space compensating system **100** for the battery unit **1** is provided. The battery system depicted in **FIG. 2** may comprise the battery unit **1** and said space compensating system **100** according to any of the examples described herein.

The space compensating system **100** comprises a plate **191.** The plate **191** is arranged on a first cell array **11A** of the one or more cell arrays **11** of the battery unit **1.** The space compensating system **100** further comprises one or more adjustable elements **110.** The one or more adjustable elements **110** are configured to be adjustable mounted to the housing **2** of the battery unit **1.** The one or more adjustable elements **110** has an end portion **111.** The end portion **111** is adapted to adjustable engage the plate **191** for adjusting a pressure exerted by the plate **191** onto the cell array **11A** for clamping the one or more cell arrays **11** against the housing **2.**

The one or more adjustable elements **110** thus presses against the first cell array **11A** to enable secure mounting of the first cell array **11A** and adjustably compensate for swelling or shrinking in the first cell array **11A.** This may be achieved by means of adjustment of the one or more adjustable elements **110.**

The one or more adjustable elements **110** may thus be adjusted in order to adjustably engage the plate **191.** Thereby, the pressure exerted to the one or more cell arrays **11,** e.g. at least the first cell array **11A** by the plate **191** may be adjusted. The plate **191** may in turn be arranged to press the one or more cell array **11,** e.g. at least the first cell array **11A,** against the housing **2.** Thereby the one or more cell array **11,** e.g. the at least the first cell array **11A,** may be clamped in position.

This may be done in order to compensate for tolerances during assembling of the battery system or during the lifetime of the battery system to compensate for the one or more cell array **11** swelling or contracting over time. It may for example be envisioned that the one or more cell array **11** will swell irreversibly after a long time of use, in response to this, an operator may adjust the adjustable members to reduce the internal pressure in the one or more cell array **11** and allow the one or more cell array **11** to expand to a larger degree. It may also be envisioned that in the event of an example wherein a plurality of cell arrays **11** are arranged in a cell stack, whereby one or more cell arrays inside stack may swell irreversibly after a certain time of use. In response to this, an operator may adjust the one or more adjustable members to reduce the cell stack compression force (all cell arrays within the stack may thus experience a reduction in compression force).

In the depicted example, the space compensating system **100** comprises a plurality of adjustable elements **110** which may be preferable to enable control of the pressure distribution on the plate **191** and consequently on the first cell array **11A.** It may however be envisioned that a single adjustable element **110** may be utilized. In the depicted example, three adjustable elements **110** are provided, i.e. a first adjustable element **110A,** a second adjustable element **110B** and a third adjustable element **110C.** It may however be envisioned that any suitable number of adjustable elements **110** may be utilized.

The space compensating system may be configured to compensate for space along a compensation axis **CA.** The one or more adjustable elements **110** may thus be adjustable parallel to said compensation axis **CA.** In the depicted example, the plate **191** may be arranged substantially orthogonally to the compensation axis **CA.**

Each of the one or more adjustable elements **110** may be adjustable along an adjustment axis **A.** The adjustment axis **A** may extend substantially orthogonal to the plate **191.** In one example, the adjustment axis **A** of each of the one or more adjustable elements **110** may extend substantially parallel with the compensation axis **CA.**

To enable easy adjustment, the adjustable elements **110** may be adjustable from outside of the housing **2.** The one or more adjustable elements **110** may be configured be accessible from an exterior of the housing **2** upon being mounted to the housing **2.**

As depicted in **FIG. 2****,** the one or more adjustable elements **110** may be configured to extend inside the interior of the housing **2** and have at least a portion being accessible from the exterior of said housing **2.**

Preferably, the adjustment may be performed by means of a suitable tool and advantageously a tool readily available for an operator or user.

For this purpose, the one or more adjustable elements **110** may comprise an engagement portion **115.** The engagement portion **115** may be configured to be engaged by a tool. The engagement portion **115** may be configured to be engaged by a tool to adjust the position of the adjustable element **110** relative to the housing **2.**

Depending on the intended tool, the engagement portion **115** may be designed in a plurality of ways. For example, the engagement portion **115** may include a key-grip, a recess, a bolt head etc..

The engagement portion **115** may be configured to be accessible from the exterior of the housing **2** upon the one or more adjustable elements **110** being mounted to the housing **2.**

The engagement portion **115** may form a second end portion of the adjustable element **110.** The second end portion may be opposite to the end portion **111.**

In the depicted example, the engagement portion **115** is adapted to be arranged outside the housing **2,** i.e. exterior to the housing **2.** The one or more adjustable elements **110** may thus extend through a corresponding hole in the housing **2,** whereby the engagement portion **115** is arranged on a first side of the corresponding hole at the exterior of the housing **2** and the end portion **111** may be arranged on an opposite side of the corresponding hole in the interior of the housing **2.**

It may however be envisioned that the engagement portion **115** is arranged inside the housing **2** but accessible from the exterior of the housing **2** for example by means of a hole enabling access through the housing **2** into the interior of the housing **2** and the engagement portion **115.**

In one example, at least one of the one or more adjustable elements **110** may comprise a threaded portion **114.** The threaded portion **114** may be configured to in threaded engagement with the housing **2,** e.g. the corresponding hole in the housing **2,** such that the at least one adjustable element **110** is adjustable relative to the plate **191** by means of rotation of the at least one adjustable element **110.** The corresponding hole in the housing **2** may thus be threaded to accommodate for the threaded connection between the adjustable element **110** and the housing **2.**

Preferably, each of the one or more adjustable elements **110** may comprise such a threaded portion **114** but it may be envisioned that other adjustable elements **110** may be adjustable in other ways such as by means of a sliding connection between the housing **2** and the adjustable element **110.**

The engagement portion **115** may thus be engaged by a tool and rotated in order to cause rotation of the adjustable element **110** and adjustment of the position of the adjustable element **110** relative to the housing **2** and/or the plate **191.** Accordingly, the adjustable element **110** may be adjusted by means of rotation about its adjustment axis **A.** The rotation may be provided by the engagement portion **115** being engaged by a tool and rotated about said adjustment axis **A.**

In one example, at least one of the one or more adjustable elements **110** may be provided as an adjustable fastening element. Examples of adjustable fastening elements may include a screw or a bolt, but other adjustable fastening elements may be envisioned as well. In one example, the adjustable fastening element may be a threaded adjustable fastening element.

To accommodate for easy use and mounting, the end portion **111** may only be adapted to engage the plate **191** by means of pressing against said plate **191.** Thus, there may be no connection means provided that interconnects the end portion **111** of the adjustable element **110** and the plate **191.**

To allow for a better pressure distribution and more securely keep the plate **191** in position, the end portion **111** may be adapted accordingly. In the depicted example, the end portion **111** of at least one of the one or more adjustable elements **110** may be provided as a flanged portion. The flanged portion may be adapted to engage the plate **191** by means of being brought into contact with the plate **191.** Preferably, each of the one or more adjustable elements **110** may comprise an end portion **111** provided as a flanged portion.

As depicted in **FIG. 2****,** the flanged portion may be a protruding portion protruding in a direction extending substantially parallel to the plate **191** and/or orthogonally to the adjustment axis **A** of the adjustable element **110.** The flanged portion may be configured to increase the surface area of the surface of the adjustable element **110** facing the plate **191.** In one example, the flanged portion may be radial flanged portion. Said radial flanged portion may protrude radially relative to the adjustment axis **A** of the adjustable element **110.**

Further referencing **FIG. 2****,** the plate **191** may be arranged on top an outer surface of the first cell array **11A.** The plate **191** may be arranged on top of an upper surface of the first cell array **11A** such that the plate **191** is supported by the upper surface of the first cell array **11A.** Advantageously, the plate may be in metal such as aluminum or steel.

To enable easy mounting, the plate **191** may be arranged to rest on top of the first cell array **11A,** e.g. be arranged on the first cell array **11A** without any fixation. In some examples, the plate **191** may be fixated to the first cell array **11A** for example by means of one or more fastening elements and/or adhesive such as glue. In the depicted example, a spacer **3** is arranged between the plate **191** and the first cell array **11A,** but it may also be envisioned that the plate **191** is in direct contact with the first cell array **11A.**

As depicted in **FIG. 2****,** the plate **191** may be arranged between the first side wall **221** of the housing **2** and the first cell array **11A.** The one or more adjustable elements **110** may be adjustably mounted to the first side wall **221.**

The space compensating system **100** may thus be configured to adjust a space between the first side wall **221** of the housing **2** and the first side wall **221** of the housing **2** and the first cell array **11A.** This may be achieved by means of adjustment of the one or more adjustable elements **110.** The adjustment may be achieved in a direction extending along the compensation axis **CA** and/or the adjustment axis **A.**

Preferably, the first side wall **221** may be extend substantially orthogonally the compensation axis **CA** and/or the adjustment axis **A.**

In the depicted example, the first side wall **221** may be an upper side wall of the housing **2.** However, it may be envisioned that the first side wall may be another side wall of the housing and that any of the other side walls may be utilized for the mounting of the adjustable element(s) **110.**

As aforementioned the battery unit may comprise one or more cell arrays **11.** The depicted example shows a plurality of cell arrays **11** arranged in a stacked configuration in the housing **2** along the stacking axis **SA.** The plurality of cell arrays **11** may thus form a cell stack. As aforementioned, each cell array **11** may comprise one or more battery cells.

The stacking axis **SA** may be substantially parallel to the compensation axis **CA** and/or the adjustment axis **A.** The plate **191** may extend substantially orthogonally to the stacking axis **SA.**

Referencing **FIG. 2****,** the first cell array **11A** may be an outermost cell array of the one or more cell arrays **11** and preferably an outermost cell array of a plurality of cell arrays **11,** e.g. an outermost cell array facing the plate **191** and/or the first side wall **221.** The plate **191** may be arranged along an outermost surface of the first cell array **11A.** The outermost surface of the first cell array **11A** may extend substantially orthogonally to the stacking axis **SA.**

The outermost surface may face the first side wall **221.** In one example, a space may be provided between the first side wall **221** and the outermost surface. The space compensating system **100** may be configured to control said space by means of adjustment of the one or more adjustable elements **110.**

**FIG. 3** depicts the battery system of **FIG. 2** in a top or front perspective with parts of the housing **2** removed.

As depicted in **FIG. 3****,** the space compensating system **100** may comprise at least two adjustable elements **110.** Having more than one adjustable element **110** may allow for an improved control of pressure distribution from the plate **191** onto the first cell array **11A** and a relative angle between the plate **191** and the first cell array **11A.** For example, undesirable tilt can be avoided by controlling the position of the plate **191** by the at least two adjustable elements **110.** Additionally, having at least two adjustable elements will press at the plate **191** at several points, allowing for reduced stiffness requirement of the plate **191.** Thereby a less thick plate **191** may be utilized without comprising the structural integrity and strength.

The at least two adjustable elements **110** may be arranged such that an angle of the plate **191** relative to the first cell array **11A** may be adjustable by means of adjustment of said at least two adjustable elements **110.** Hence, the angle of the plate **191** may be adjusted to follow a potential angle, i.e. a non-straight angle, of the surface of the first cell array **11A** facing the plate **191.** Accordingly, the at least two adjustable elements **191** may be arranged such that the plate **191** is parallel to said surface of the first cell array **11A** facing the plate **191.**

Additionally or alternatively, the at least two adjustable elements **110** may be arranged such that a curvature of the plate **191** may be adjustable by means of adjustment of the at least two adjustable elements **110.** It may for example be envisioned that the plate **191** is in a resilient material such as steel or aluminum. Thereby, even pressure distribution may be achieved even cases of un-even expansion in the first cell array **11A.** This may in turn allow for keeping the plate **191** straight and parallel to the first cell array **11A.** In some cases the at least two adjustable elements **190** may be adjusted to bend the plate **191,** e.g. the bend the plate **191** between the adjustable elements **110** and the first cell array **11A,** to for example compensate for un-even expansion of the first cell array **11A.** According to such an example, a relatively even pressure distribution may be achieved even for a non-even first cell array **11A,** e.g. a first cell array **11A** having an uneven outer surface facing the plate **191.**

Advantageously, the adjustable elements **110** may be evenly distributed relative to the plate **191.** For example, the adjustable elements **110** may be distributed along a common axis extending along the plate **191.** In the depicted example, the adjustable elements **110** are distributed along a common central axis extending along the plate **191.** A larger number of adjustable elements **191** may accommodate for more even pressure distribution and ensuring that the plate **191** is kept straight. It may for example be envisioned that groups of adjustable elements **110** may each be distributed along common axes extending in different directions along the plate **191.**

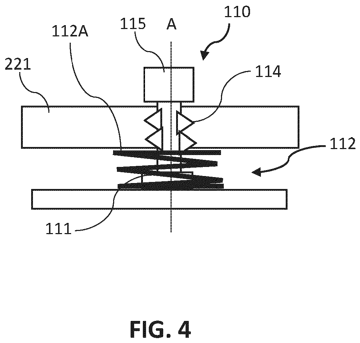

**FIG. 4** depicts aspects of a space compensating system according to an example. The space compensating system may for example be a space compensating system according to any of the examples described herein.

The space compensating system **100** may comprise at least one biasing element **112.** The biasing element **112** may be configured to provide a biasing force urging the plate **191** towards the first cell array **11A.** The biasing element **112** may further improve the flexibility of the space compensating system **100** as it may provide additional clamping force against the plate **191** in addition to the clamping force provided by the adjustable element **110.** This may be particularly advantageous to ensure that a suitable clamping force may be provided even in cases where the adjustable element(s) **191** has not been properly adjusted and/or the dimensions of the one or more cell arrays **11** has been altered during use without a consequent adjustment of the adjustable element(s) **191.**

Worded differently, the biasing element **112** may be configured to bias the plate 191 against the plate **191.**

The biasing element **112** may thus be biased to exert a force on the plate **191** in the direction towards the first cell array **11A.** The biasing element **112** may be adapted to exert the aforementioned force on a surface of the first cell array **11A** facing the end portion **111** of the adjustable element(s) **110.**

In one example, the at least on biasing element **112** may be adapted to be arranged between the plate **191** and the housing **2.** In one example, the biasing element **112** may be configured to be mounted to the housing **2** and the plate **191.** For example, a first end of the biasing element **112** may be configured to be mounted to the housing **2** and a second end, opposite to the first end, may be configured to be mounted to the plate **191.** In one example, the biasing element **112** may extend substantially parallel with the adjustment axis **A** and/or the compensation axis **CA.**

In the depicted example, the biasing element **112** may comprise a spring **112A,** such as a coil spring. The spring **112A** may be arranged coaxially with the least one of the one or more adjustable elements **110** such that the adjustable element **110** extends inside the spring **112A.** In one example, a central longitudinal axis of the spring **112A** may coincide with the adjustment axis **A** of the adjustable element **110.**

It may be envisioned that a plurality of biasing elements **112** and/or springs **112A** may be provided to provide the desired biasing. It for example be envisioned that some biasing elements **112** may not comprise springs **112A** and that some biasing elements **112** comprises said springs **112A.** For example, some biasing elements **112** may be provided as elastic bushings, elastic pads etc. and some biasing elements **112** may comprise one or more springs **112A.**

In one example, one or more biasing elements **112** may be configured to be arranged between the plate **191** and the housing **2** independently from the one or more adjustable elements **110.**

Although **FIG. 4** only depicts a single adjustable element **110** it may be envisioned that each adjustable element **110** of the one or more adjustable element **110** may be arranged together with an associated biasing element **112** or that one or more of a plurality of adjustable elements **110** of the space compensating system **100** may be arranged together with an associated biasing element **112.**

According to an aspect, a space compensating system, battery system or vehicle according to any of the following examples may be provided.

Example 1: A space compensating system (100) for a battery unit (1) comprising one or more cell arrays (11) and a housing (2), the one or more cell arrays (11) being arranged in said housing (2), the space compensating system (100) comprising: a plate (191) arranged on a first cell array (11A) of the one or more cell arrays (11), and one or more adjustable elements (110) configured to be adjustably mounted to the housing (2) of the battery unit (1), wherein the one or more adjustable elements (110) each has an end portion (111) adapted to adjustably engage the plate (191) for adjusting a pressure exerted by the plate (191) onto the cell array (11A) for clamping the one or more cell arrays (11) against the housing (2).

Example 2: The space compensating system (100) according to example 1, wherein each of the one or more adjustable elements (110) is configured to be accessible from an exterior of the housing (2) upon being mounted to said housing (2).

Example 3: The space compensating system (100) according to example 2, wherein each of the one or more adjustable elements (110) comprises an engagement portion (115) being configured to be engaged by a tool to adjust the position of the adjustable element (110) relative to the housing (2), wherein said engagement portion (115) is configured to be accessible from the exterior of said housing (2), upon the one or more adjustable elements (110) being mounted to the housing (2).

Example 4: The space compensating system (100) according to any of examples 1-3, further comprising at least one biasing element (112) configured to provide a biasing force urging the plate (191) towards the first cell array (11A).

Example 5: The space compensating system (100) according to example 4, wherein the at least one biasing element (112) is adapted to be arranged between the plate (191) and the housing (2).

Example 6: The space compensating system (100) according to example 4 or 5, wherein the biasing element (112) comprises a spring (112A) arranged coaxially with said at least one of the one or more adjustable elements (110) such that said adjustable element (110) extends inside the spring (112A).

Example 7: The space compensating system (100) according to any of examples 4-6, wherein the biasing element (112) is configured to be mounted to the housing (2) and the plate (191).

Example 8: The space compensating system (100) according to any of examples 1-7, further comprising at least two adjustable elements (110) arranged such that an angle of the plate (191) relative to the first cell array (11A) and/or a curvature of the plate (191) is adjustable by means of adjustment of said at least two adjustable elements (110).

Example 9: The space compensating system (100) according to any of examples 1-8, wherein the end portion (111) of at least one of the one or more adjustable elements (110) is provided as a flanged portion adapted to engage the plate (191) by means of being brought into contact with said plate (191).

Example 10: The space compensating system (100) according to any of examples 1-9, wherein at least one of the one or more adjustable elements (110) comprises a threaded portion (114) configured to be in threaded engagement with the housing (2) such that said at least one adjustable element (110) is adjustable relative to the plate (191) by means of rotation of said at least one adjustable element (110).

Example 11: The space compensating system (100) according to any of examples 1-10, wherein at least one of the one or more adjustable elements (110) is provided as an adjustable fastening element such as a bolt or screw.

Example 12: A battery system comprising a battery unit (1) and a space compensating system (100) according to any of examples 1-11.

Example 13: The battery system according to example 12, wherein the plate (191) is arranged on top of an upper surface of the first cell array (11A) such that said plate (191) is supported by said upper surface of the first cell array (11A).

Example 14: The battery system according to example 12 or 13, wherein the one or more adjustable elements (110) are adjustable along an adjustment axis (A) extending substantially orthogonal to the plate (191).

Example 15: The battery system according to any of examples 12-14, wherein the plate (191) is arranged between a first side wall (221) of the housing (2) and the first cell array (11A) and the one or more adjustable elements (110) are adjustably mounted to said first side wall (221).

Example 16: The battery system according to example 15, wherein the space compensating system (100) is configured to adjust a space between the first side wall (221) of the housing (2) and the first cell array (11A) by means of adjustment of the one or more adjustable elements (110).

Example 17: The battery system according to any of examples 12-16, further comprising a plurality of cell arrays (11) arranged in a stacked configuration in the housing (2) along a stacking axis (SA).

Example 18: The battery system according to example 17, wherein the first cell array (11A) is an outermost cell array of the one or more cell arrays (11) and the plate (191) is arranged along an outermost surface of the first cell array (11A) extending substantially orthogonally to the stacking axis (SA).

Example 19: The battery system according to example 1, further comprising a plurality of adjustable elements (110) configured to be accessible from an exterior of the housing (2) upon being mounted to said housing (2), wherein each of the plurality of adjustable elements (110) comprises an engagement portion (115) being configured to be engaged by a tool to adjust the position of the adjustable element (110) relative to the housing (2), wherein said engagement portion (115) is configured to be accessible from the exterior of said housing (2) upon the plurality of adjustable elements (110) being mounted to the housing (2), the battery system further comprising a plurality of biasing elements (112) configured to provide a biasing force urging the plate (191) towards the first cell array (11A), wherein each biasing element (112) comprises a spring (112A) arranged coaxially with one of the plurality of adjustable elements (110) such that said adjustable element (110) extends inside the spring (112A).

Example 20: A vehicle (50) comprising a battery system according to any of examples 12-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A space compensating system (100) for a battery unit (1) comprising one or more cell arrays (11) and a housing (2), the one or more cell arrays (11) being arranged in said housing (2), the space compensating system (100) comprising:
a plate (191) arranged on a first cell array (11A) of the one or more cell arrays (11), and
one or more adjustable elements (110) configured to be adjustably mounted to the housing (2) of the battery unit (1), wherein the one or more adjustable elements (110) each has an end portion (111) adapted to adjustably engage the plate (191) for adjusting a pressure exerted by the plate (191) onto the cell array (11A) for clamping the one or more cell arrays (11) against the housing (2).

2. The space compensating system (100) of claim 1, wherein each of the one or more adjustable elements (110) is configured to be accessible from an exterior of the housing (2) upon being mounted to said housing (2).

3. The space compensating system (100) of claim 2, wherein each of the one or more adjustable elements (110) comprises an engagement portion (115) being configured to be engaged by a tool to adjust the position of the adjustable element (110) relative to the housing (2), wherein said engagement portion (115) is configured to be accessible from the exterior of said housing (2), upon the one or more adjustable elements (110) being mounted to the housing (2).

4. The space compensating system (100) of any of claim 1-3, further comprising at least one biasing element (112) configured to provide a biasing force urging the plate (191) towards the first cell array (11A).

5. The space compensating system (100) of claim 4, wherein the at least one biasing element (112) is adapted to be arranged between the plate (191) and the housing (2).

6. The space compensating system (100) of claim 4 or 5, wherein the biasing element (112) comprises a spring (112A) arranged coaxially with said at least one of the one or more adjustable elements (110) such that said adjustable element (110) extends inside the spring (112A).

7. The space compensating system (100) of any of claims 1-6, further comprising at least two adjustable elements (110) arranged such that an angle of the plate (191) relative to the first cell array (11A) and/or a curvature of the plate (191) is adjustable by means of adjustment of said at least two adjustable elements (110).

8. The space compensating system (100) of any of claims 1-7, wherein the end portion (111) of at least one of the one or more adjustable elements (110) is provided as a flanged portion adapted to engage the plate (191) by means of being brought into contact with said plate (191).

9. The space compensating system (100) of any of claims 1-8, wherein at least one of the one or more adjustable elements (110) comprises a threaded portion (114) configured to be in threaded engagement with the housing (2) such that said at least one adjustable element (110) is adjustable relative to the plate (191) by means of rotation of said at least one adjustable element (110).

10. A battery system comprising a battery unit (1) and a space compensating system (100) of any of claims 1-9.

11. The battery system of claim 10, wherein the plate (191) is arranged on top of an upper surface of the first cell array (11A) such that said plate (191) is supported by said upper surface of the first cell array (11A).

12. The battery system of claim 10 or 11, wherein the plate (191) is arranged between a first side wall (221) of the housing (2) and the first cell array (11A) and the one or more adjustable elements (110) are adjustably mounted to said first side wall (221).

13. The battery system of claim 12, wherein the space compensating system (100) is configured to adjust a space between the first side wall (221) of the housing (2) and the first cell array (11A) by means of adjustment of the one or more adjustable elements (110).

14. The battery system of claim 1, further comprising a plurality of adjustable elements (110) configured to be accessible from an exterior of the housing (2) upon being mounted to said housing (2), wherein each of the plurality of adjustable elements (110) comprises an engagement portion (115) being configured to be engaged by a tool to adjust the position of the adjustable element (110) relative to the housing (2), wherein said engagement portion (115) is configured to be accessible from the exterior of said housing (2) upon the plurality of adjustable elements (110) being mounted to the housing (2), the battery system further comprising a plurality of biasing elements (112) configured to provide a biasing force urging the plate (191) towards the first cell array (11A), wherein each biasing element (112) comprises a spring (112A) arranged coaxially with one of the plurality of adjustable elements (110) such that said adjustable element (110) extends inside the spring (112A).

15. A vehicle (50) comprising a battery system of any of claim 10-14.

## Amended claims

### Amended claims in accordance with Rule 137(2) EPC.

1. A space compensating system (100) for a battery unit (1) comprising one or more cell arrays (11) and a housing (2), the one or more cell arrays (11) being arranged in said housing (2), the space compensating system (100) comprising:
a plate (191) arranged on a first cell array (11A) of the one or more cell arrays (11),
one or more adjustable elements (110) configured to be adjustably mounted to the housing (2) of the battery unit (1), wherein the one or more adjustable elements (110) each has an end portion (111) adapted to adjustably engage the plate (191) for adjusting a pressure exerted by the plate (191) onto the cell array (11A) for clamping the one or more cell arrays (11) against the housing (2), and
at least one biasing element (112) configured to provide a biasing force urging the plate (191) towards the first cell array (11A),
wherein the at least one biasing element (112) is adapted to be arranged between the plate (191) and the housing (2) and configured to be mounted to the housing (2) and the plate (191), and
wherein the end portion (111) of at least one of the one or more adjustable elements (110) is provided as a flanged portion adapted to engage the plate (191) by means of being brought into contact with said plate (191).

2. The space compensating system (100) of claim 1, wherein each of the one or more adjustable elements (110) is configured to be accessible from an exterior of the housing (2) upon being mounted to said housing (2).

3. The space compensating system (100) of claim 2, wherein each of the one or more adjustable elements (110) comprises an engagement portion (115) being configured to be engaged by a tool to adjust the position of the adjustable element (110) relative to the housing (2), wherein said engagement portion (115) is configured to be accessible from the exterior of said housing (2), upon the one or more adjustable elements (110) being mounted to the housing (2).

4. The space compensating system (100) of any of claims 1-3, wherein the biasing element (112) comprises a spring (112A) arranged coaxially with said at least one of the one or more adjustable elements (110) such that said adjustable element (110) extends inside the spring (112A).

5. The space compensating system (100) of any of claims 1-4, further comprising at least two adjustable elements (110) arranged such that an angle of the plate (191) relative to the first cell array (11A) and/or a curvature of the plate (191) is adjustable by means of adjustment of said at least two adjustable elements (110).

6. The space compensating system (100) of any of claims 1-5, wherein at least one of the one or more adjustable elements (110) comprises a threaded portion (114) configured to be in threaded engagement with the housing (2) such that said at least one adjustable element (110) is adjustable relative to the plate (191) by means of rotation of said at least one adjustable element (110).

7. A battery system comprising a battery unit (1) and a space compensating system (100) of any of claims 1-6.

8. The battery system of claim 7, wherein the plate (191) is arranged on top of an upper surface of the first cell array (11A) such that said plate (191) is supported by said upper surface of the first cell array (11A).

9. The battery system of claim 7 or 8, wherein the plate (191) is arranged between a first side wall (221) of the housing (2) and the first cell array (11A) and the one or more adjustable elements (110) are adjustably mounted to said first side wall (221).

10. The battery system of claim 9, wherein the space compensating system (100) is configured to adjust a space between the first side wall (221) of the housing (2) and the first cell array (11A) by means of adjustment of the one or more adjustable elements (110).

11. The battery system of claim 7, further comprising a plurality of adjustable elements (110) configured to be accessible from an exterior of the housing (2) upon being mounted to said housing (2), wherein each of the plurality of adjustable elements (110) comprises an engagement portion (115) being configured to be engaged by a tool to adjust the position of the adjustable element (110) relative to the housing (2), wherein said engagement portion (115) is configured to be accessible from the exterior of said housing (2) upon the plurality of adjustable elements (110) being mounted to the housing (2), the battery system further comprising a plurality of biasing elements (112) configured to provide a biasing force urging the plate (191) towards the first cell array (11A), wherein each biasing element (112) comprises a spring (112A) arranged coaxially with one of the plurality of adjustable elements (110) such that said adjustable element (110) extends inside the spring (112A).

12. A vehicle (50) comprising a battery system of any of claim 7-11.
